**Europäisches Patentamt**

(19) **European Patent Office**

**Office européen des brevets**

(11) Numéro de publication: **0 053 954**
**B1**

(12) **FASCICULE DE BREVET EUROPEEN**

(45) Date de publication du fascicule du brevet:
28.03.84

(21) Numéro de dépôt: **81401703.4**

(22) Date de dépôt: **27.10.81**

(51) Int. Cl.³: **F 16 H 7/12**

(54) Procédé et dispositif de mise en tension d'une courroie de transmission.

(30) Priorité: **08.12.80 FR 8025989**

(43) Date de publication de la demande:
**16.06.82 Bulletin 82/24**

(45) Mention de la délivrance du brevet:
**28.03.84 Bulletin 84/13**

(84) Etats contractants désignés:
**DE GB IT**

(56) Documents cités:
**FR - A - 1 581 626**
**FR - A - 2 183 356**
**FR - A - 2 346 612**
**US - A - 1 557 466**

(73) Titulaire: **AUTOMOBILES PEUGEOT, 75, avenue de la Grande Armée, F-75116 Paris (FR)**
Titulaire: **AUTOMOBILES CITROEN, 117-167 Quai André Citroen, F-75747 Paris Cedex 15 (FR)**

(72) Inventeur: **Bortolussi, Gérard, 3, rue de l'Hostellerie, F-95130 Franconville (FR)**

(74) Mandataire: **Bressand, Georges et al, c/o CABINET LAVOIX 2 Place d'Estienne d'Orves, F-75441 Paris Cedex 09 (FR)**

ACTORUM AG

Procédé et dispositif de mise en tension d'une courroie de transmission.

L'invention concerne un procédé et un dispositif destinés à assurer la mise en tension d'une courroie ou autre lien de transmission.

On sait que la tension sous laquelle doivent travailler les courroies de transmission se situe dans une fourchette de valeurs relativement étroite. Le réglage de la tension d'une courroie s'effectue généralement à l'aide d'un dispositif comprenant un galet tendeur monté sur un support réglable en position et sollicité par un ressort.

Dans les dispositifs les plus simples, le ressort prend appui sur une butée fixe. Ces dispositions ne permettent pas de régler la tension à une valeur suffisamment précise, par suite des dispersions dimensionnelles inévitables (entr'axes des poulies, longueur de la courroie, etc . . .).

C'est pourquoi on est amené à utiliser des dispositifs plus élaborés permettant de compenser ces dispersions dimensionnelles par un réglage de la butée sur laquelle le ressort prend appui (voir par exemple FR-A-1.581.626). Malheureusement, ces dispositifs présentent des inconvénients qui limitent leur emploi: ils sont souvent complexes et encombrants; ils nécessitent une attention particulière de la part de l'opérateur; l'accès aux moyens de réglage doit se faire dans le plan de la courroie, ce qui n'est pas souvent possible.

L'invention vise à fournir des moyens particulièrement simples, très peu encombrants, ne nécessitant pas d'attention particulière de la part de l'opérateur et dans lesquels l'accès aux moyens de réglage puisse se faire transversalement par rapport au plan de la courroie.

Elle concerne donc un procédé de mise en tension d'une courroie ou autre lien sans fin, au moyen d'un galet ou autre organe tendeur, porté par un support dont la position autour d'un axe porté par un bâti fixe peut être réglée au moyen d'un ressort en appui entre le support et une butée réglable portée par le bâti fixe, caractérisé en ce qu'on place le ressort sous contrainte en rendant momentanément la butée réglable solidaire du support, on exerce sur ce support un couple déterminé pour rattraper les divers jeux dans le dispositif, on bloque la butée réglable par rapport au bâti fixe, on libère le ressort, puis on bloque le support dans la position qu'il occupe après la libération du ressort.

Elle a également pour objet un dispositif tendeur de courroie ou autre lien sans fin, comprenant un galet ou autre organe tendeur porté par un support monté sur un bâti fixe de façon à pouvoir osciller autour d'un axe par rapport à ce bâti et de façon à pouvoir être bloqué par rapport à ce même bâti, un ressort étant prévu, qui prend appui entre ledit support et une butée réglable portée par le bâti, caractérisé en ce qu'il comprend des moyens pour rendre la butée réglable provisoirement solidaire du support en maintenant le ressort sous contrainte, et des moyens pour exercer un couple sur le support et rattraper les jeux.

Un exemple de réalisation fait l'objet de la description qui suit, en référence aux dessins joints dans lesquels:

– la Fig.1 est une vue d'ensemble d'une transmission par courroie, munie du dispositif tendeur suivant l'invention;

– les Fig. 2 à 4 sont des coupes partielles, suivant les lignes 2–2 à 4–4 de la Fig.1.

La transmission représentée comporte une poulie motrice 1 et deux poulies réceptrices 2,3 reliées par une courroie sans fin 4. Les poulies 1,2 et 3 sont montées, respectivement, sur des arbres 5,6 et 7 qui tourillonnent dans un bâti ou carter 8.

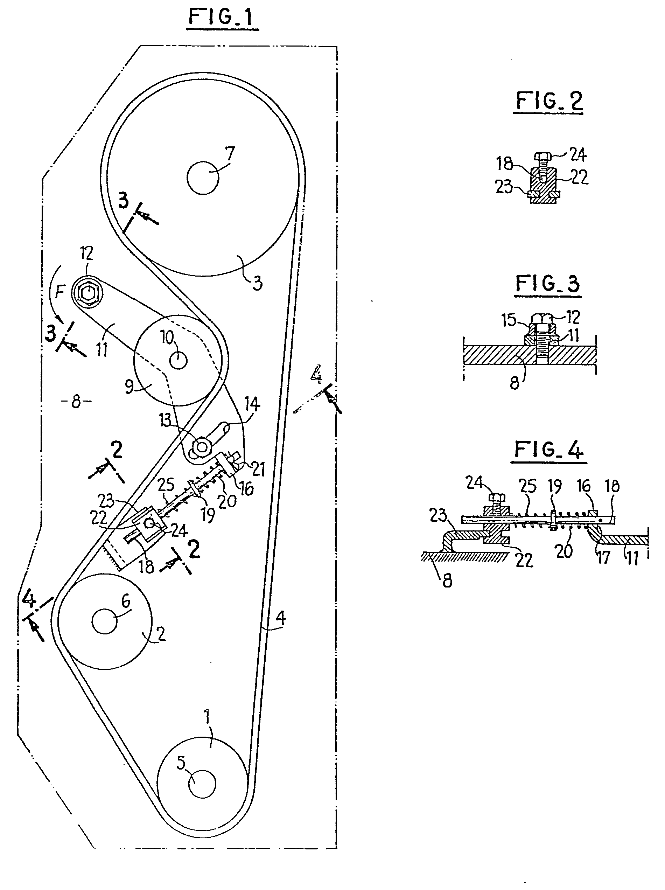

La courroie 4 passe également sur un galet tendeur 9, monté sur un axe 10 porté par un support 11 réglable par rapport au bâti 8. Le support 11 peut être fixé sur le bâti 8 dans une position angulaire choisie, d'une part, au moyen d'une vis 12 et, d'autre part, au moyen d'une vis 13 qui traverse une lumière 14. Un six-pans creux 15, solidaire du support 11 est placé autour de la vis 12 (Fig.3).

Le support 11 comporte, à son extrémité opposée à la vis 12, une patte 16 repliée à angle droit et munie d'un orifice 17 dans lequel s'engage une tige 18, munie d'un épaulement 19. Entre ce dernier et la platte 16 est disposé un ressort 20 maintenu comprimé, avant la mise en place de l'ensemble du dispositif, par une goupille 21 traversant la tige 18.

Un taquet 22, monté coulissant sur la tige 8, du côté opposé au ressort 20, est destiné à coopérer avec une fourchette 23 solidaire du bâti (Fig. 4). Une vis 24 traverse en partie le taquet 22 pour permettre le blocage de la tige 18 par rapport à ce dernier (Fig. 2). De préférence, un ressort 25, très souple par rapport au ressort 20, est disposé autour de la tige 18, entre l'épaulement 19 et le taquet 22.

Le dispositif décrit est utilisé de la façon suivante: Avant montage, le ressort 20 est préalablement comprimé à une longueur donnée et maintenu sous contrainte par la goupille 21. La courroie 4 ayant été mise en place sur les poulies 1, 2, 3 et le galet 9 et les vis 12, 13 et 24 étant desserrées, un couple de valeur déterminée est exercé, dans le sens de la flèche F, sur le support 11, grâce au six-pans 15. L'application de ce couple a pour fonction de rattraper les divers jeux dans le mécanisme et d'amener le support 11 dans une position voisine de sa position correcte. Le taquet 22 étant en appui sur la fourchette 23, ce qui est assuré facilement grâce au ressort 25, on bloque alors la tige 18, au moyen de la vis 24, puis on extrait la goupille 21. L'effort du ressort 20 se reporte sur le support 11 qui vient occuper sa position définitive dans laquelle il assure la tension correcte de la courroie. Il suffit alors de le bloquer dans cette position au moyen des deux vis 12 et 13.

On voit que le dispositif décrit est particulièrement simple, peu encombrant, facile à mettre en œuvre et qu'il compense très bien toutes les dispersions dimensionnelles, du fait que la butée réglable constituée par l'épaulement 19 de la tige 18 n'est positionnée qu'après rattrapage de tous les jeux.

De plus, l'accès aux divers moyens de réglage et de blocage (12,13,15,24) est particulièrement aisé.

## Revendications

1. Procédé de mise en tension d'une courroie ou autre lien sans fin (4), au moyen d'un galet ou autre organe tendeur (9), porté par un support (11) dont la position autour d'un axe (12) porté par un bâti fixe (8) peut être réglée au moyen d'un ressort (20), en appui entre le support et une butée réglable (19), portée par le bâti fixe (8), caractérisé en ce qu'on place le ressort (20) sous contrainte en rendant momentanément la butée réglable (19) solidaire du support (11), on exerce sur ce support (11) un couple déterminé pour rattraper les divers jeux dans le dispositif, on bloque la butée réglable (19) par rapport au bâti fixe, on libère le ressort (20), puis on bloque le support '11) dans la position qu'il occupe après la libération du ressort (20).

2. Dispositif tendeur de courroie ou autre lien sans fin, comprenant un galet ou autre organe tendeur porté par un support monté sur un bâti fixe de façon à pouvoir osciller autour d'un axe par rapport à ce bâti et de façon à pouvoir être bloqué par rapport à ce même bâti, un ressort étant prévu, qui prend appui entre ledit support et une butée réglable portée par le bâti, caractérisé en ce qu'il comprend des moyens pour rendre la butée réglable (19) provisoirement solidaire du support (11) en maintenant le ressort (20) sous contrainte, et des moyens pour exercer un couple sur le support et rattraper les jeux.

3. Dispositif suivant la revendication 2, caractérisé en ce que la butée réglable (19) est portée par une tige (18) qui s'étend de part et d'autre de la butée et qui est guidée et peut être bloquée, d'une part, par rapport au bâti fixe (8) et, d'autre part, par rapport au support (11).

4. Dispositif suivant la revendication 3, caractérisé en ce qu'il est prévu une goupille (21) pour rendre la tige (18) provisoirement solidaire du support (11).

5. Dispositif suivant la revendication 3, caractérisé en ce que les moyens de guidage et de blocage de la tige (18) par rapport au bâti comprennent un taquet (22) dans lequel la tige peut coulisser, et une vis de blocage (24) coopérant avec ce taquet.

6. Dispositif suivant la revendication 5, caractérisé en ce qu'il est prévu un ressort (25) entre la butée réglable (19) et le taquet (22), ce ressort étant très souple par rapport au ressort (20).

7. Dispositif suivant la revendication 2, caractérisé en ce que les moyens permettant d'appliquer un couple au support (11) comprennent un six-pans creux ou organe analogue, solidaire du support et disposé coaxialement à son axe (12) d'oscillation par rapport au bâti (8).

## Patentansprüche

1. Verfahren zum Spannen eines Transmissionsriemens oder eines anderen endlosen Transmissionselementes unter Verwendung einer Spannrolle (9) oder eines anderen Spannelementes, das von einem Halteorgan (11) getragen wird, dessen Lage durch eine Drehbewegung um eine an einem festen Rahmen (8) befestigte Achse (12) mittels einer Feder (20) verändert werden kann, die zwischen dem Halteorgan und einem an dem festen Rahmen angebrachten veränderbaren Anschlag (19) eingespannt ist, dadurch gekennzeichnet, dass die Feder (20) unter Spannung eingesetzt wird, wozu der veränderbare Anschlag (19) bezüglich des Halteorgans (11) vorübergehend festgelegt wird, dass dann auf das Halteorgan ein bestimmtes Drehmoment ausgeübt wird, um das Spiel der Anordnung nachzustellen, dass daraufhin der veränderbare Anschlag (19) bezüglich des festen Rahmens (8) festgelegt wird, dass dann die Feder (20) freigegeben wird und schliesslich das Halteorgan in der Stellung, die es nach der Freigabe der Feder (20) annimmt, arretiert wird.

2. Vorrichtung zum Spannen eines Transmissionsriemens oder eines anderen endlosen Transmissionselements mit einer Spannrolle oder einem anderen Spannelement, das an einem Halteorgan befestigt ist, das an einem festen Rahmen um eine Achse herum schwenkbeweglich bezüglich des Rahmens angebracht ist und bezüglich des Rahmens arretiert werden kann, mit einer Feder, die zwischen dem Halteorgan und einem veränderbaren, vom Rahmen getragenen Anschlag eingespannt ist, dadurch gekennzeichnet, dass sie Mittel aufweist, mit denen der veränderbare Anschlag (19) vorübergehend bezüglich des Halteorgans (11) festgelegt werden kann und die die Feder (20) unter Spannung halten, sowie Mittel aufweist, durch die auf das Halteorgan zum Ausgleichen von Spiel ein Drehmoment ausgeübt werden kann.

3. Vorrichtung nach Anspruch 2, dadurch gekennzeichnet, dass der veränderbare Anschlag (19) von einem Stab (18) getragen wird, der diesseits und jenseits des Anschlags verläuft und der einerseits bezüglich des festen Rahmens (8) und andererseits bezüglich des Halteorgans (11) geführt ist und arretiert werden kann.

4. Vorrichtung nach Anspruch 3, dadurch gekennzeichnet, dass ein Splint (21) vorgesehen ist, durch den der Stab (18) vorübergehend bezüglich des Halteorgans (11) festgelegt wird.

5. Vorrichtung nach Anspruch 3, dadurch gekennzeichnet, dass die Mittel zum Führen und Arretieren des Stabes (18) bezüglich des Rahmens ein Zapfen (22) in dem der Stab gleitbar aufgenommen ist, sowie eine Klemmschraube sind, die mit dem Zapfen (22) zusammenwirkt.

6. Vorrichtung nach Anspruch 5, dadurch gekennzeichnet, dass zwischen dem veränderbaren Anschlag (19) und dem Zapfen (22) eine Feder (25) angeordnet ist, die gegenüber der vorgenannten Feder (20) sehr weich ist.

7. Vorrichtung nach Anspruch 2, dadurch gekennzeichnet, dass zum Ausüben eines Drehmomentes auf das Halteorgan (11) ein einstückig mit dem Halteorgan verbundener Sechskant dient, der koaxial zur Achse (12) der Schwenkbewegung des Halteorgans bezüglich des Rahmens (8) angeordnet ist.

**Claims**

1. A method for tensioning a belt or other endless connecting means (4) by means of a roller or other tensioning means (9) carried by a support (11) whose position about a pin (12) carried by a fixed frame (8) may be adjusted by means of a spring (20) bearing against the support and an adjustable abutment (19) carried by the fixed frame (8), characterised in that the spring (20) is stressed by temporarily rendering the adjustable abutment (19) rigid with the support (11), a given torque is exerted on this support (11) so as to take up the various clearances in the device, the adjustable abutment (19) is locked relative to the fixed frame, the spring (20) is released and then the support (11) is locked in the position it occupies after the releasing of the spring (20).

2. A device for tensioning a belt or other endless connecting means, comprising a roller or other tensioning means carried by a support mounted on a fixed frame to be pivotable about a pin relative to this frame so as to be capable of being locked relative to this frame, a spring being provided which bears between said support and an adjustable abutment carried by the frame, characterised in that it comprises means for rendering the adjustable abutment (19) temporarily rigid with the support (11) by maintaining the spring (20) under stress, and means for exerting a torque on the support and taking up the clearances.

3. A device according to claim 2, characterised in that the adjustable abutment (19) is carried by a rod (18) which extends on each side of the abutment and is guided and may be locked, on one hand, relative to the fixed frame (8) and, on the other hand, relative to the support (11).

4. A device according to claim 3, characterised in that a pin (21) is provided for rendering the rod (18) temporarily rigid with the support (11).

5. A device according to claim 3, characterised in that the means for guiding and locking the rod (18) relative to the frame comprise a block (22) in which the rod is slidable and a locking screw (24) cooperating with this block.

6. A device according to claim 5, characterised in that a spring (25) is provided between the adjustable abutment (19) and the block (22), this spring being very flexible relative to the spring (20).

7. A device according to claim 2, characterised in that the means for applying a torque to the support (11) comprise a hexagonal-shaped recess or like means rigid with the support and disposed coaxially with its pin (12) about which it pivots relative to the frame (8).

0 053 954

## FIG.1

## FIG.2

## FIG.3

## FIG.4

5